# EUROPÄISCHE PATENTANMELDUNG

(11) **EP 1 312 421 A2**
(43) Veröffentlichungstag der Anmeldung: **21.05.2003**
(21) Anmeldenummer: 02023797.0
(22) Anmeldetag: 25.10.2002
(51) Int. Cl.: B05D 7/00, D06M 15/263, D06M 11/79, C14C 11/00

(54) **Flexibel beschichtetes Laminat**

(30) Priorität: 06.11.2001 DE 10153950
(71) Anmelder: Bayer Aktiengesellschaft, 51368 Leverkusen (DE)
(72) Erfinder: Rische, Thorsten, Dr., 59423 Unna (DE); Hassel, Tillmann, Dr., 50259 Pulheim (DE); Meixner, Jürgen, Dr., 47803 Krefeld (DE); Schütze, Delev-Ingo, Dr., 51519 Odenthal (DE)

(57) **Zusammenfassung**

Die Erfindung betrifft wasserdampfdurchlässige Beschichtungsverbünde aufgebaut aus Beschichtungen enthaltend kieselsolmodifizierte wässrige Polymerdispersionen und flexiblen Substraten, insbesondere für den Textil- und Lederbereich.

## Beschreibung

Die Erfindung betrifft einen wasserdampfdurchlässigen Beschichtungsverbund aufgebaut aus Beschichtungen enthaltend kieselsolmodifizierte wässrige Polymerdispersionen und flexible Substrate, insbesondere für den Textil- und Lederbereich.

Bei der Beschichtung von Textilien und Leder werden zunehmend wässrige Systeme eingesetzt. Die Anforderungen an solche Beschichtungssysteme bestehen vor allem in einer hohen Beständigkeit gegenüber Chemikalien und Wasser, einer hohen mechanischen Belastbarkeit sowie einer hohen Zug- und Reißfestigkeit sowie Haftung. Diese Anforderungen werden weitgehend von Polymerdispersionen, aufgebaut aus Monomeren, die mindestens eine Doppelbindung enthalten wie beispielsweise Polyacrylat- und Polybutadien-Dispersionen, erfüllt. Die verschiedenen Möglichkeiten zur Herstellung solcher Dispersionen wurden z.B. von B. Vollmert in einem Übersichtsartikel ("Grundriss der Makromolekularen Chemie", Band 1, S. 44 ff., Vollmert Verlag 1988, Karlsruhe) zusammengefasst.

In der JP-A 60011503 wird die Verwendung von 0,1 bis 4 Gew.-% Kieselsol in wässrigen, aus Doppelbindungen enthaltenden Monomeren aufgebauten Polymerdispersionen in Gegenwart eines anionischen Tensids beschrieben, die zu erhöhter Haftung und Lösemittelbeständigkeit von Anstrichfarben führen.

Wässrige Polyacrylatdispersionen mit hydrophilierten anorganischen oder organischen Mikropartikeln, vorzugsweise Polyacrylatteilchen werden in der US-A 5,258,424 offenbart. Als anorganische Mikropartikel werden Kieselsole eingesetzt. Diese Beschichtungsmittel werden zur Beschichtung von Betonoberflächen verwendet. Die in der US-A 5,258,424 offenbarten kieselsolmodifizierten Polyacrylate weisen nur sehr geringe Wasserdampfdurchlässigkeiten auf.

Für den Bereich der Textil und Lederbeschichtung sind keine wasserdampfdurchlässigen Polyacrylat- und Polybutadien-Dispersionen bekannt, die über signifikant hohe Wasserdampfdurchlässigkeiten in Kombination mit dem oben genannten Eigenschaftsprofil verfügen.

Der vorliegenden Erfindung lag daher die Aufgabe zugrunde, einen wasserdampfdurchlässigen Beschichtungsverbund, insbesondere für die Textil- und Lederbeschichtung bereitzustellen, der über die geforderten mechanischen und chemischen Eigenschaften sowie über eine hohe Wasserdampfdurchlässigkeit verfügt.

Es wurde gefunden, dass flexible Substrate, wie z.B. Leder und Textilien mit Hilfe von wässrigen Polymerdispersionen, aufgebaut aus ungesättigten Monomeren, wie beispielsweise Polyacrylat- und Polybutadiendispersionen, in Kombination mit Kieselsolen als Bindemittel beschichtet werden können und der resultierende Beschichtungsverbund eine deutlich verbesserte Wasserdampfdurchlässigkeit aufweist.

Gegenstand der Erfindung ist ein wasserdampfdurchlässiger Beschichtungsverbund enthaltend ein oder mehrere flexible Substrate, auf welche ein- oder beidseitig, ein oder mehrere Beschichtungsmittel aufgetragen sind, die gleich oder verschieden sein können, dadurch gekennzeichnet, dass mindestens ein Beschichtungsmittel eine kieselsolmodifizierte wässrige Polymerdispersion, aufgebaut aus ungesättigten Monomeren, als Bindemittel enthält.

Die in dem erfindungsgemäßen Beschichtungsverbund eingesetzten kieselsolmodifizierten wässrigen Polymerdispersionen enthalten bevorzugt
(I) 40 bis 95 Gew.-%, bevorzugt 50 bis 90 Gew.-% und besonders bevorzugt 60 bis 85 Gew.-% einer wässrigen Polymerdispersion (A), aufgebaut aus ungesättigten Monomeren und
(II) 5 bis 60 Gew.-%, bevorzugt 10 bis 50 Gew.-% und besonders bevorzugt 15 bis 40 Gew.-% einer Kieselsol Dispersion (B),
wobei gilt, dass die Prozentangaben sich auf das Gewicht nichtflüchtiger Anteile beziehen und sich zu 100 Gew.-% addieren.

Die in den erfindungsgemäßen Verbünden eingesetzten kieselsolmodifizierten Polymerdispersionen enthalten im Polymerdispersionsteil (A) bevorzugt einen Festkörperanteil von 20 bis 60 % und besonders bevorzugt von 30 bis 50 %.

Für die Komponente (A) sind grundsätzlich alle wässrigen Polymerdispersionen des Standes der Technik, aufgebaut aus ungesättigten Monomeren, geeignet wie beispielsweise Polyacrylatdispersionen und/oder Polybutadiendispersionen. Dabei werden Hydroxylgruppen aufweisende Monomere, "saure" Monomere oder Monomere, die weder über Säure- noch über OH-Gruppen verfügen, eingesetzt. Es ist auch möglich Mischungen der genannten Monomere einzusetzen.

Geeignete Hydroxylgruppen aufweisende Monomere sind insbesondere Hydroxylalkylester der Acrylsäure oder Methacrylsäure, bevorzugt mit 2 bis 4 Kohlenstoffatomen im Alkylrest wie z.B. 2-Hydroxyethylacrylat oder -methacrylat, 2- oder 3-Hydroxypropylacrylat oder -methacrylat sowie die isomeren Hydroxybutylacrylate oder -methacrylate oder beliebige Gemische derartiger Monomerer.

Geeignete "saure" Comonomere sind im Prinzip alle olefinisch ungesättigten, polymerisierbaren Verbindungen, die mindestens eine Carboxyl- und/oder Sulfonsäuregruppe aufweisen, wie beispielsweise olefinisch ungesättigte Mono- oder Dicarbonsäure des Molekulargewichtsbereichs 72 bis 207, z.B. Acrylsäure, Methacrylsäure, Maleinsäure, Itaconsäure oder Sulfonsäuregruppen aufweisende olefinisch ungesättigte Verbindungen, z.B. 2-Acrylamido-2-methylpropansulfonsäure oder beliebige Gemische derartiger olefinisch ungesättigter Säuren.

Als dritte Gruppe von olefinisch ungesättigten Monomeren, die bei der Herstellung der Copolymerisate im Allgemeinen mitverwendet werden, sind solche olefinisch ungesättigte Verbindungen zu nennen, die weder saure Gruppen noch Hydroxylgruppen aufweisen. Hierzu gehören beispielsweise Ester der Acrylsäure oder der (Meth)-acrylsäure mit 1 bis 18, bevorzugt mit 1 bis 8 Kohlenstoffatomen im Alkoholrest, z.B. Methylacrylat, Ethylacrylat, Isopropylacrylat, n-Propylacrylat, n-Butylacrylat, 2-Ethylhexylacrylat, Isobornylacrylat, n-Stearylacrylat, die diesen Acrylaten entsprechenden Methacrylate, Styrol, alkylsubstituierte Styrole, Butadien, Isopren, Acrylnitril, Methacrylnitril, Vinylacetat oder Vinylstearat oder beliebige Gemische derartiger Monomerer. Auch Epoxidgruppen aufweisende Comonomere, wie z.B. Glycidylacrylat oder -methacrylat oder Monomere, wie z.B. N-Methoxymethacrylamid oder -methacrylamid können in geringen Mengen mitverwendet werden.

Die Herstellung der wässrigen Polymerdispersionen (A) erfolgt nach an sich bekannten Methoden der radikalischen Polymerisation, z.B. der Lösungspolymerisation, der Emulsionspolymerisation und der Suspensionspolymerisation. Bevorzugt ist das Verfahren der radikalischen Emulsionspolymerisation im wässrigen Milieu.

Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird Wasser allein oder mit einem Teil des anionischen Emulgators, gegebenenfalls unter Beimischung eines nichtionischen Emulgators, sowie mit einem Teil der Monomermischung vorgelegt, auf die Polymerisationstemperatur erwärmt, die Polymerisation im Fall einer Monomervorlage radikalisch gestartet und das restliche Monomergemisch zusammen mit einem Initiatorgemisch und dem Emulgator im Verlauf von 1 bis 10 Stunden, bevorzugt von 3 bis 6 Stunden, zudosiert. Gegebenenfalls wird anschließend noch nachaktiviert, um die Polymerisation bis zu einem Umsatz von mindestens 99 % durchzuführen.

Die hierbei eingesetzten Emulgatoren sind anionischer und/oder nichtionischer Natur. Von den Emulgatoren mit anionischer Natur sind solche mit Carboxylatgruppen, Sulfat-, Sulfonat-, Phosphat- oder Phosphonatgruppen einsetzbar. Bevorzugt sind Emulgatoren mit Sulfat-, Sulfonat-, Phosphat- oder Phosphonatgruppen. Die Emulgatoren können niedermolekular oder hochmolekular sein. Letztere werden z.B. in der DE-A 3 806 066 und der DE-A 1 953 349 beschrieben.

Bevorzugt sind solche anionischen Emulgatoren, die aus langkettigen Alkoholen oder substituierten Phenolen und einer an der Hydroxylgruppe gebundenen Polyetherkette aus Ethylenoxideinheiten mit Polymerisationsgraden zwischen 2 und 100 sowie einer in Form einer Estereinheit angebundenen Schwefelsäure- bzw. Phosphorsäuregruppe aufgebaut sind. Als Neutralisationsmittel für die unveresterten Säuregruppen sind Ammoniak oder Amine bevorzugt. Die Emulgatoren können dem Emulsionsansatz einzeln oder in beliebigen Mischungen zugesetzt werden.

Als nichtionogene Emulgatoren, die meist in Kombination mit den obengenannten anionischen Emulgatoren eingesetzt werden können, eignen sich Umsetzungsprodukte von aliphatischen, araliphatischen, cycloaliphatischen oder aromatischen Carbonsäuren, Alkoholen, Phenolderivaten bzw. Aminen mit Epoxiden, wie z.B. Ethylenoxid. Beispiele dafür sind Umsetzungsprodukte von Ethylenoxid mit Carbonsäuren des Rizinusöls, Abietinsäure, mit längerkettigen Alkoholen wie Oleylalkohol, Laurylalkohol, Stearylalkohol, mit Phenolderivaten wie z.B. substituierten Benzyl-, Phenylphenolen, Nonylphenolen und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, bevorzugt zwischen 5 und 50.

Diese Emulgatoren werden in Mengen von 0,1 bis 10 Gew.-%, bezogen auf die Mischung der Monomeren zugegeben. Als eventuelle Colösemittel kommen sowohl wasserlösliche als auch wasserunlösliche Lösungsmittel in Betracht. Als solche kommen beispielsweise Aromaten wie Benzol, Toluol, Xylol, Chlorbenzol, Ester wie z.B. Ethylacetat, Butylacetat, Methylglykolacetat, Ethylglykolacetat, Methoxypropylacetat, Ether wie Butylglykol, Tetrahydrofuran, Dioxan, Ethylglykolether, Ether des Diglykols, Ketone wie Aceton, Methylethylketon, Methylisobutylketon, Trichlormonofluorethan, cyclische Amide wie N-Methylpyrrolidon oder N-Methylcaprolactam in Betracht.

Die durch Radikale initiierte Polymerisation kann durch wasserlösliche und wasserunlösliche Initiatoren bzw. Initatorsysteme ausgelöst werden, deren Halbwertzeiten des Radikalzerfalls bei Temperaturen von 10°C bis 100°C und zwischen 0,5 s und 7 h liegen.

Im Allgemeinen erfolgt die Polymerisation in wässriger Emulsion im genannten Temperaturbereich, bevorzugt zwischen 30 und 90°C, unter einem Druck von 10³ bis 2 x 10⁴ mbar, wobei sich die genaue Polymerisationstemperatur nach der Art des Initiators richtet. Die Initiatoren werden in Mengen von 0,05 bis 6 Gew.-%, bezogen auf die Gesamtmenge an Monomeren eingesetzt.

Geeignete Initiatoren sind z.B. wasserlösliche und wasserunlösliche Azoverbindungen wie Azoisobuttersäuredinitril oder 4,4'-Azo-bis-(4-cyanpentansäure) sowie anorganische und organische Peroxide, wie z.B. Dibenzoylperoxid, t-Butylperpivalat, t-Butyl-per-2-ethylhexanoat, t-Butylperbenzoat, t-Butylhydroperoxid, Di-t-butylperoxid, Cumolhydroperoxid, Dicyclohexyl- und Dibenzylperoxydicarbonat sowie die Natrium-, Kalium,- oder Ammoniumsalze der Peroxodischwefelsäure und Wasserstoffperoxid. Die Peroxodisulfate und Wasserstoffperoxide werden oft in Kombination mit Reduktionsmitteln, wie z.B. dem Natriumsalz der Formamidinsulfinsäure, Ascorbinsäure oder Polyalkylenpolyaminen eingesetzt. Hiermit wird im Allgemeinen eine deutliche Erniedrigung der Polymerisationstemperatur erzielt.

Zur Regelung des Molekulargewichtes der Polymeren können übliche Regler eingesetzt werden, wie z.B. n-Dodecylmercaptan, t-Dodecylmercaptan, Diisopropylxanthogendisulfid, Di(methylentrimethylolpropan)xanthogendisulfid und Thioglykol.

Sie werden in Mengen von höchstens 3 Gew.-%, bezogen auf das Monomergemisch zugegeben.

Nach beendeter Polymerisation werden die in wässriger Dispersion vorliegenden Polymerisate gegebenenfalls mit Neutralisationsmittel bis zu Neutralisationsgraden von 30 bis 100 %, bevorzugt von 50 bis 100 %, versetzt.

Hierzu werden als Neutralisationsmittel anorganische Basen, Ammoniak oder Amine zugesetzt. Als anorganische Basen können beispielsweise Natriumhydroxid, Kaliumhydroxid, als Amine neben Ammoniak Trimethylamin, Triethylamin, Dimethylethanolamin, Methyldiethanolamin, Triethanolamin eingesetzt werden. Die Neutralisationsmittel können sowohl im stöchiometrischen Unter- als auch Überschuss eingesetzt werden, wobei die obengenannten Gehalte an Sulfonat- und/oder Carboxylatgruppen, insbesondere an Carboxylgruppen und die obengenannten Säurezahlen resultieren.

Im Falle einer völligen Neutralisation der gegebenenfalls vorliegenden sauren Gruppen resultiert dann die Säurezahl Null, während der Gehalt an Sulfonatund/oder Carboxylatgruppen dem ursprünglichen Gehalt an Sulfonsäuregruppen bzw. Carboxylgruppen entspricht. Bei einer Teilneutralisation entspricht der Gehalt an Sulfonat- und/oder Carboxylatgruppen der Menge des eingesetzten Neutralisationsmittels. Die erhaltenen wässrigen Dispersionen besitzen die obengenannten Konzentrationen und Viskositäten. Eventuell zugesetzte Colösungsmittel können in den oben angegebenen Mengen in der wässrigen Dispersion verbleiben oder aber auch im Anschluss an die Polymerisationsreaktion destillativ entfernt werden.

Bevorzugte wässrige Polymerdispersionen (A) sind Polyacrylatdispersionen und/oder Polybutadiendispersionen des Standes der Technik, die im Bereich der Beschichtung flexibler Substrate, insbesondere der Textil- und Lederbeschichtung geeignet sind wie beispielsweise die Polyacrylatdispersionen Nr. 1 bis 25 (siehe Tabelle 1). Bevorzugte Polybutadiendispersionen sind auch beispielsweise Euderm®-Resin40B und Euderm®-Resin50B (siehe Tabelle 1, Dispersion Nr. 26-27). Die chemischen und physikalischen Eigenschaften der genannten Dispersionen wurden, wenn möglich, in Tabelle 1 aufgeführt.

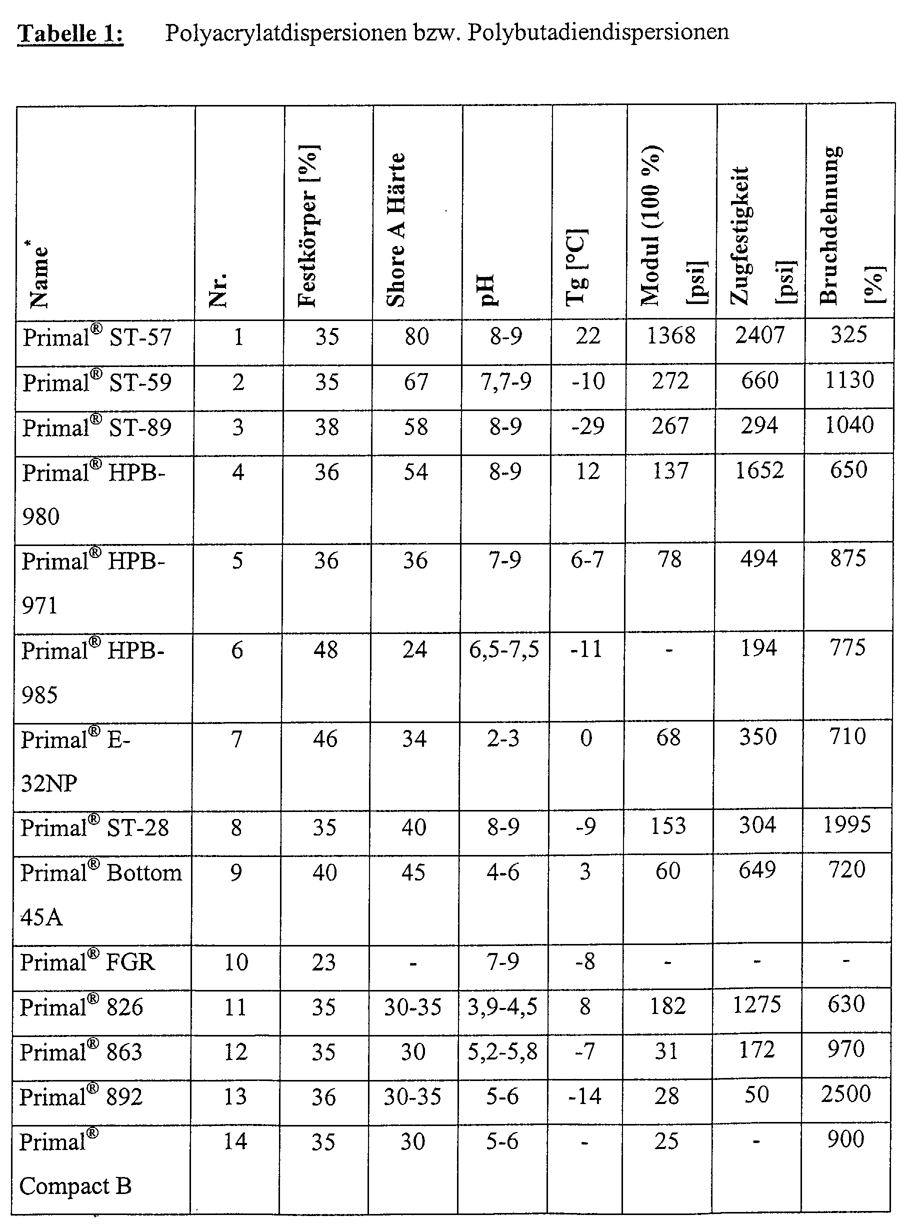

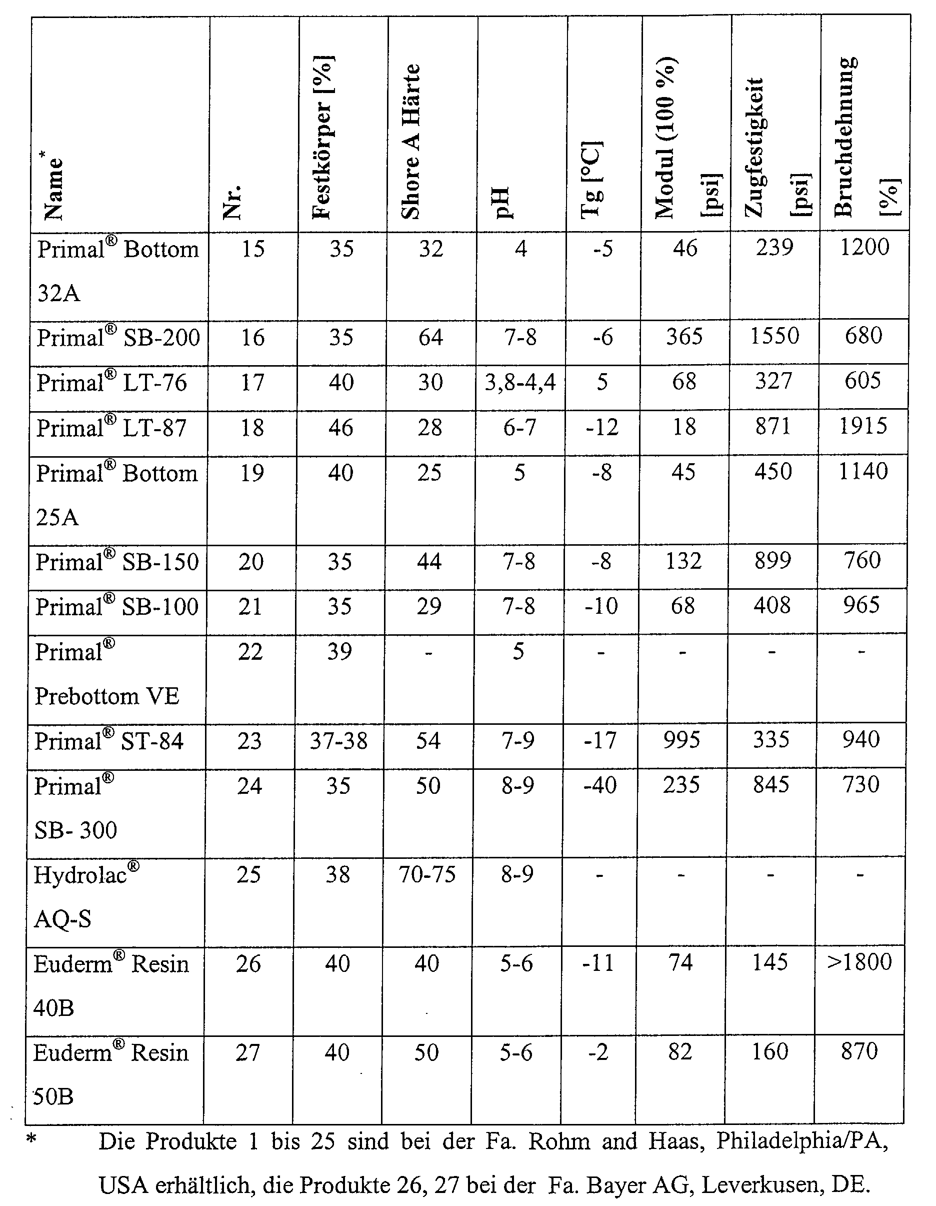

Besonders bevorzugt sind Polyacrylatdispersionen des Standes der Technik, die im Bereich der Beschichtung flexibler Substrate insbesondere der Textil- und Lederbeschichtung geeignet sind, wie beispielsweise Primal® HPB 971, Primal® Bottom 32 A, Primal® SB 100, Primal® SB 150, Primal® SB 200, Primal® SB 300 (siehe Tabelle 1).

Geeignete Kieselsole (B) sind kolloidale Lösungen von amorphen Siliciumdioxid in Wasser. Sie werden durch Neutralisation von Wasserglas, wie z.B. beschrieben in Ullmanns Encyklopädie der technischen Chemie, Bd. 21, 4. Auflage, Verlag Chemie, Weinheim, 1982, Kapitel 5, S. 456 ff. erhalten. Kieselsole sind beispielweise unter den Markennamen Levasil® (Fa. Bayer AG, Leverkusen, DE), Ludox® (Fa. DuPont, USA), Nalcoag® (Fa. Nalco Chemical, USA), Snowtex® (Fa. Nissan, Japan) kommerziell erhältlich. Die SiO₂-Partikel weisen Durchmesser zwischen 1 bis 150 nm auf. Bevorzugt Kieselsole sind solche, deren SiO₂-Partikel einen Durchmesser zwischen 5 bis 100 nm aufweisen. Besonders bevorzugt sind Kieselsole mit einem mittleren SiO₂-Partikeldurchmesser von 7 bis 50 nm. Kieselsole können sowohl basisch (pH > 7) als auch sauer (pH < 7) eingestellt sein. Der Festkörpergehalt von Kieselsolen liegt gewöhnlich zwischen 1 bis 60 %, bevorzugt 20 bis 50 % und besonders bevorzugt 25 bis 45 %.

Die in den erfindungsgemäßen Beschichtungsverbünden enthaltenen kieselsolmodifizierten wässrigen Bindemittel können durch Mischung der Polymerdispersion (A) und dem Kieselsol (B) nach allen bekannten Mischtechniken hergestellt werden. Die Emulsionspolymerisation kann vor oder nach der Modifikation mit Kieselsolen erfolgen. Bevorzugt ist die Möglichkeit die Kieselsole vor und während der Emulsionspolymerisation einzubringen. Das im Sinne einer Lösungs-, Emulsions- oder Suspensionpolymerisation synthetisierte Polymer wird hierzu in Kieselsol bzw. einer Kieselsol/Wasser-Mischung anstelle von reinem Wasser hergestellt.

Die kieselsolmodifizierten wässrigen Polymerdispersionen sind lager- und versandfähig und können zu einem beliebig späteren Zeitpunkt verarbeitet werden. Je nach der gewählten chemischen Zusammensetzung des Polymers und nach Gehalt an Kieselsol erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden.

Die im erfindungsgemäßen Beschichtungsverbund verwendeten Beschichtungsmittel können neben den wässrigen kieselsolmodifizierten Polymerdispersionen als Bindemittel auch die aus der Lacktechnologie bekannten Hilfs- und Zusatzmittel, wie z.B. nichtionische und/oder anionische Verdicker, Füllstoffe, Pigmente, Wachse, Griffmittel, Farbstoffe, Lösungsmittel, Verlaufshilfsmittel sowie Vernetzern enthalten.

Die für die erfindungsgemäßen wasserdampfdurchlässigen Beschichtungsverbünde eingesetzten Substrate sind flexibel und können beispielsweise aus Holz, Metall, Kunststoff, Papier, Leder, Textilien, Filz, Glas, oder Glasfasern bestehen. Bevorzugte Substrate sind gewebte und nichtgewebte Textilien und Leder.

Zur Herstellung des wasserdampfdurchlässigen Beschichtungsverbundes wird/werden ein oder mehrere flexible(s) Substrat(e), ein- oder beidseitig mit einem oder mehreren Beschichtungsmittel(n), die gleich oder verschieden sein können, entweder beschichtet, überzogen oder imprägniert, wobei mindestens ein Beschichtungsmittel kieselsolmodifizierte wässrige Polymerdispersion, aufgebaut aus ungesättigten Monomeren, enthält.

Dabei können die wässrigen kieselsolmodifizierten Polymerdispersionen gegebenenfalls mittels eines handelsüblichen Verdickers auf Streichviskosität gebracht werden und gegebenenfalls weitere Additive zugesetzt werden.

Der Auftrag der Beschichtungsmittel auf das Substrat kann auf bekannte Weisen, z.B. durch Streichen, Gießen, Rakeln, Spritzen, Walzen, Drucken oder Tauchen erfolgen. Die Trocknung des Lackfilms kann bei Raumtemperatur oder erhöhter Temperatur, aber auch durch Einbrennen bei bis zu 200°C erfolgen.

Bei der Applikation der Beschichtungsmittel werden in der Regel ein oder mehrere Striche hintereinander, aufgebracht, so dass die Gesamtdicke der Beschichtung aus Grund- und Deckstrich(en) 10 bis 100 µm, bevorzugt 20 bis 60 µm, beträgt. Als Grundstrich kann auch eine zu einer mikroporösen Schicht auftrocknende Paste verwendet werden, wie es in der DE-A 2 020 153 beschrieben ist. Der anschließend aufgebrachte Deckstrich schützt den erfindungsgemäßen Beschichtungsverbund aus einer oder mehreren Beschichtung(en) und Substrat gegen mechanische Beanspruchung und Abrieb.

Das Aufbringen der Beschichtungen aus Grund- und Deckstrich auf das Substrat ist aber auch nach dem sogenannten Umkehrverfahren möglich. Hierbei wird zunächst der Deckstrich auf einen Trennträger aufgetragen und getrocknet. Nach dem Auftragen eines zweiten Grund- oder Haftstriches wird das Substrat in die noch feuchte Schicht leicht eingedrückt. Nach dem Trocknen entsteht ein fester Verbund aus Beschichtung und Substrat, der vom Trennträger gelöst wird und in seinem Aufbau weitgehend dem der vorher beschriebenen Direktbeschichtung entspricht.

Im erfindungsgemäßen Beschichtungsverbund enthält mindestens ein Beschichtungsmittel die wässrigen kieselsolmodifizierten Bindemittel. Es ist jedoch auch möglich andere Bindemittel, wie z.B. Polyurethandispersionen einzusetzen. Bevorzugt sind diese wasserdampfdurchlässig. Um einen möglichst unbeeinträchtigten Wasserdampftransport durch den erfindungsgemäßen Beschichtungsverbund zu gewährleisten, ist es zweckmäßig, dass alle Beschichtungen des Gesamtverbundes wasserdampfdurchlässig sind.

In einer bevorzugten Ausführungsform enthalten alle Beschichtungsmittel des erfindungsgemäßen Beschichtungsverbundes die wässrigen kieselsolmodifizierten Polymerdispersionen, aufgebaut aus ungesättigten Monomeren.

Die resultierende Wasserdampfdurchlässigkeit des erfindungsgemäßen Beschichtungsverbundes führt insbesondere auf Textilien und Leder beim Endanwender zu einem signifikant verbesserten Tragekomfort im Vergleich zu den herkömmlichen nicht wasserdampfdurchlässigen Beschichtungen des Standes der Technik.

### Beispiele:

### Eingesetzte Substanzen:

A. Primal® SB 150 (Rohm and Haas, Philadelphia/PA, USA): 35 %ige Polyacrylatdispersion mit folgenden Eigenschaften: Zugfestigkeit: 6,2 MPa; Bruchdehnung: 760 %
B. Euderm® Resin 50 B: 40 %ige Polybutadiendispersion mit folgenden Eigenschaften: Zugfestigkeit: 11,6 MPa; Bruchdehnung: 870 %
C. Levasil® 100/30 (Bayer AG, Leverkusen, DE): 30 %ige anionische Kieselsoldispersion mit folgenden Eigenschaften: Spezifische Oberfläche: 100 m²/g; mittlere Teilchengröße: 30 nm; pH = 10.
D. Levasil® 200/30 (Bayer AG, Leverkusen, DE): 30 %ige anionische Kieselsoldispersion mit folgenden Eigenschaften: Spezifische Oberfläche: 200 m²/g; mittlere Teilchengröße: 15 nm; pH = 9.
E. Levasil® 300/30 (Bayer AG, Leverkusen, DE): 30 %ige anionische Kieselsoldispersion mit folgenden Eigenschaften: Spezifische Oberfläche: 300 m²/g; mittlere Teilchengröße: 9 nm; pH = 10.
F. Levasil® VP AC 4038 (Bayer AG, Leverkusen, DE): 30 %ige anionische Kieselsoldispersion mit folgenden Eigenschaften: Spezifische Oberfläche: 200 m²/g; mittlere Teilchengröße: 15 nm; pH = 9.
G. Levasil® 50/50 (Bayer AG, Leverkusen, DE): 30 %ige anionische Kieselsoldispersion mit folgenden Eigenschaften: Spezifische Oberfläche: 50 m²/g; mittlere Teilchengröße: 50 nm; pH = 9.
H. Levasil® 200S/30 (Bayer AG, Leverkusen, DE): 30 %ige kationische Kieselsoldispersion mit folgenden Eigenschaften: Spezifische Oberfläche: 200 m²/g; mittlere Teilchengröße: 15 nm; pH = 4.

### Eingesetzte kieselsolmodifizierte Polymerdispersionen

### 1.) Kieselsolmodifizierte Polymerdispersion (POLY 1)

In einem Reaktionsgefäß mit Rührer, Tropftrichter und Rückflusskühler werden 81,5 g Polymerdispersion **A** vorgelegt 10,0 g Kieselsol-Dispersion **G** innerhalb von 10 min unter Rühren zugetropft. Anschließend wird weitere 30 min bei Raumtemperatur gerührt.

### 2.) Kieselsolmodifizierte Polymerdispersion (POLY 2)

Durchführung analog 1.) jedoch 80,0 g Polymerdispersion **A** und 16,2 g Kieselsol-Dispersion **C.**

### 3.) Kieselsolmodifizierte Polymerdispersion (POLY 3)

Durchführung analog 1.) jedoch 79,2 g Polymerdispersion **A** und 16,0 g Kieselsol-Dispersion **D**.

### 4.) Kieselsolmodifizierte Polymerdispersion (POLY 4)

Durchführung analog 1.) jedoch 80,0 g Polymerdispersion **A** und 16,2 g Kieselsol-Dispersion **E.**

### 5.) Kieselsolmodifizierte Polymerdispersion (POLY 5)

Durchführung analog 1.) jedoch 80,0 g Polymerdispersion **A** und 16,1 g Kieselsol-Dispersion **F**.

### 6.) Kieselsolmodifizierte Polymerdispersion (POLY 6)

Durchführung analog 1.) jedoch 800,0 g Polymerdispersion **A** und 200,0 g Kieselsol-Dispersion **C**.

### 7.) Kieselsolmodifizierte Polymerdispersion (POLY 7)

Durchführung analog 1.) jedoch 1500,0 g Polymerdispersion **A** und 500,0 g Kieselsol-Dispersion **C**.

### 8.) Kieselsolmodifizierte Polymerdispersion (POLY 8)

Durchführung analog 1.) jedoch 1333,4 g Polymerdispersion **A** und 666,6 g Kieselsol-Dispersion **C.**

### 9.) Kieselsolmodifizierte Polymerdispersion (POLY 9)

Durchführung analog 1.) jedoch 500,0 g Polymerdispersion **A** und 500,0 g Kieselsol-Dispersion **C**.

### 10.) Kieselsolmodifizierte Polymerdispersion (POLY 10)

Durchführung analog 1.) jedoch 45,0 g Polymerdispersion **B** und 6,2 g Kieselsol-Dispersion **G**.

### 11.) Kieselsolmodifizierte Polymerdispersion (POLY 11)

Durchführung analog 1.) jedoch 39,9 g Polymerdispersion **B** und 9,1 g Kieselsol-Dispersion **C**.

### 12.) Kieselsolmodifizierte Polymerdispersion (POLY 12)

Durchführung analog 1.) jedoch 39,0 g Polymerdispersion **B** und 8,8 g Kieselsol-Dispersion **D**.

### 13.) Kieselsolmodifizierte Polymerdispersion (POLY 13)

Durchführung analog 1.) jedoch 39,9 g Polymerdispersion **B** und 9,0 g Kieselsol-Dispersion **F**.

### 14.) Kieselsolmodifizierte Polymerdispersion (POLY 14)

Durchführung analog 1.) jedoch 39,1 g Polymerdispersion **B** und 9,0 g Kieselsol-Dispersion **H**.

### 15.) Kieselsolmodifizierte Polymerdispersion (POLY 15)

Durchführung analog 1.) jedoch 1600,0 g Polymerdispersion **B** und 400,0 g Kieselsol-Dispersion **C**.

### 16.) Kieselsolmodifizierte Polymerdispersion (POLY 16)

Durchführung analog 1.) jedoch 1500,0 g Polymerdispersion **B** und 500,0 g Kieselsol-Dispersion **C**.

### 17.) Kieselsolmodifizierte Polymerdispersion (POLY 17)

Durchführung analog 1.) jedoch 1333,4 g Polymerdispersion **B** und 666,6 g Kieselsol-Dispersion **C**.

### 18.) Kieselsolmodifizierte Polymerdispersion (POLY 18)

In einem Reaktionsgefäß mit Rührer, Tropftrichter und Rückflusskühler werden 751,9 g Polymerdispersion **B** und 248,1 g destilliertes Wasser vorgelegt und 1000,0 g Kieselsol-Dispersion **C** innerhalb von 10 min unter Rühren zugetropft. Anschließend wird weitere 30 min bei Raumtemperatur gerührt.

### Anwendungstechnischer Teil:

### Erfindungsgemäße Herstellung von wasserdampfdurchlässigen Beschichtungs-verbünden

### Textil:

Das Eigenschaftsbild der erfindungsgemäß hergestellten Beschichtungsverbünde wird in Form der freien Filmen für die Beschichtung textiler Materialien bestimmt.

### Die Filme werden wie folgt hergestellt:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich.

Zum Aufbringen der einzelnen Striche werden die Produkte (wässrige Bindemittel werden vorher durch Zugabe von Ammoniak/Polyacrylsäure auf eine Viskosität von 4500 mPa·s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des 100 %-Moduls, erfolgte nach DIN 53504 an Filmen größer 100 µm Stärke.

Die Quellungen wurde nach 2 Stunden Lagerung in Ethylacetat, Aceton bzw. Toluol durch Differenzmessung von Länge und Breite berechnet.

Die Wasserdampfdurchlässigkeiten (WDD) werden nach den Maßgaben gemessen, wie sie in der Druckschrift DS 2109 TM1, der British Textile Technology Group, Manchester, England hinterlegt sind.

Die Bestimmung der mittleren Teilchengrößen (angegeben ist das Zahlenmittel) der Polymerdispersionen erfolgte mittels Laserkorrelations-Spektroskopie (Gerät: Malvern Zetasizer 1000, Malver Inst. Limited) an der jeweiligen Dispersion.

**Tabelle 2:**

| Polymerdispersion A (Polyacrylatdispersion)/Kieselsol Abmischungen mit unterschiedlichen Kieselsoltypen | | | | | | |
|---|---|---|---|---|---|---|
| | **A** | POLY 1 | POLY 2 | POLY 3 | POLY 4 | POLY 5 |
| **Festkörpergehalt** **[Gew.-%]** | 35,6 | 37,3 | 34,8 | 34,8 | 34,8 | 34,8 |
| **pH-Wert** | 7,36 | 7,24 | 7,30 | 7,26 | 7,43 | 7,34 |
| **Kieselsol** | - | **G** | **C** | **D** | **E** | **F** |
| **SiO**_{**2**}**-Gehalt bzgl.** **Festkörper [%]** | 0 | 15,0 | 15,0 | 15,0 | 15,0 | 15,0 |
| **Mittlere** **Teilchengröße** **[nm]** | 73,3 | 78,9 | 80,9 | 85,1 | 83,4 | 97,6 |

Die Ergebnisse in Tabelle 2 belegen, dass eine Vielzahl unterschiedlicher Kieselsoltypen verwendbar sind.

**Tabelle 3:**

| Polymerdispersion A (Polyacrylatdispersion)/ Kieselsol C Abmischungen mit unterschiedlichen Kieselsolanteilen | | | | | |
|---|---|---|---|---|---|
| | **A** | POLY 6 | POLY 7 | POLY 8 | POLY 9 |
| **Festkörpergehalt [Gew.-%]** | 35,6 | 34,1 | 33,7 | 33,5 | 32,9 |
| **pH-Wert** | 7,36 | 7,64 | 7,61 | 7,62 | 7,88 |
| **SiO**_{**2**}**-Gehalt bzgl. Festkörper [%]** | - | 17,0 | 22,0 | 28,0 | 45,0 |
| **Mittlere Teilchengröße [nm]** | 73,3 | 75,3 | 82,0 | 80,3 | 80,9 |
| **Modul (100 %)** | 0,7 | 2,3 | 3,0 | 4,4 | 8,0 |
| **Zugfestigkeit [MPa]** | 8,4 | 12,2 | 10,8 | 9,2 | 10,5 |
| **Bruchdehnung [%]** | 730 | 590 | 500 | 350 | 250 |
| **Quellung in Essigester [%]** | 955 | 342 | 280 | 266 | 91 |
| **Quellung in Aceton [%]** | 1139 | 463 | 463 | 284 | 195 |
| **Quellung in Toluol [%]** | 904 | 463 | 337 | 284 | 237 |
| **Wasserdampfdurchlässigkeit** **[g/m**^{**2**}**d]** | 3313 | 11957 | 18119 | 19749 | 17937 |

Die in Tabelle 3 angeführten Ergebnisse belegen, dass mit zunehmender Kieselsolkonzentration z.B. des Kieselsols C im Vergleich zur nicht modifizierten Polyacrylatdispersion **A** eine deutlich verbesserte Chemikalienbeständigkeit sowie signifikant verbesserte Wasserdampfdurchlässigkeiten resultieren.

**Tabelle 4:**

| Polymerdispersion B (Polybutadiendispersion)/ Kieselsol Abmischungen mit unterschiedlichen Kieselsoltypen | | | | | | |
|---|---|---|---|---|---|---|
| | **B** | POLY 10 | POLY 11 | POLY 12 | POLY 13 | POLY 14 |
| **Festkörpergehalt** **[Gew.-%]** | 39,9 | 40,1 | 38,4 | 38,5 | 37,0 | 38,5 |
| **pH-Wert** | 6,37 | 6,61 | 7,07 | 7,16 | 4,41 | 7,78 |
| **Kieselsol** | - | **G** | **C** | **D** | **H** | **F** |
| **SiO**_{**2**}**-Gehalt bzgl.** **Festkörper [%]** | - | 15,0 | 15,0 | 15,0 | 15,0 | 15,0 |
| **Mittlere** **Teilchengröße [nm]** | 73,6 | 73,4 | 73,3 | 106,3 | 86,0 | 71,2 |

Die Ergebnisse in Tabelle 4 belegen, dass eine Vielzahl unterschiedlicher Kieselsoltypen verwendbar sind.

**Tabelle 5:**

| Polymerdispersion **B** (Polybutadiendispersion)/Kieselsol C Abmischungen mit unterschiedlichen Kieselsolanteilen | | | | | |
|---|---|---|---|---|---|
| | **B** | POLY 15 | POLY 16 | POLY 17 | POLY 18 |
| **Festkörpergehalt** **[Gew.-%]** | 39,9 | 37,9 | 37,6 | 37,5 | 30,8 |
| **pH-Wert** | 6,29 | 7,12 | 7,33 | 7,70 | 8,50 |
| **SiO**_{**2**}**-Gehalt bzgl.** **Festkörper [%]** | 0 | 16,3 | 20,6 | 28,0 | 50,9 |
| **Mittlere Teilchengröße [nm]** | 109,4 | 266,4 | 288,3 | 268,2 | 206,1 |

| | **B** | POLY 15 | POLY 16 | POLY 17 | POLY 18 |
|---|---|---|---|---|---|
| **Modul (100 %)** | 1,1 | 1,3 | 2,1 | 2,8 | 5,3 |
| **Zugfestigkeit [MPa]** | 11,6 | 6,4 | 13,6 | 12,4 | 11,5 |
| **Bruchdehnung [%]** | 870 | 600 | 730 | 630 | 540 |
| **Quellung in Essigester [%]** | 392 | 295 | 252 | 200 | 187 |
| **Quellung in Aceton [%]** | 1563 | 904 | 463 | 463 | 337 |
| **Quellung in Toluol [%]** | 536 | 397 | 337 | 284 | 237 |
| **Wasserdampfdurchläs sigkeit [g/m**^{**2**}**d]** | 150 | 5400 | 1200 | 4000 | 14000 |

Die in Tabelle 5 angeführten Ergebnisse belegen, dass mit zunehmender Kieselsolkonzentration z.B. des Kieslsols C im Vergleich zur nicht modifizierten Polybutadiendispersion **B** eine deutlich verbesserte Chemikalienbeständigkeit sowie signifikant verbesserte Wasserdampfdurchlässigkeiten resultieren.

### Leder:

### 1) Eingesetzte Materialien:

### A) Farbe:

Handelsübliche wässrige Rußformulierung mit 26% Ruß und Stellmittel

### B) Weichmachendes Füllmittel:

Wässrige Formulierung (20% Trockengehalt) aus Wollfett, Stärke und Silikon

### C) Binder:

Acrylate Nr. 5 und Nr. 15 (siehe Tabelle 1)

### D) Kieselsol:

### Kieselsol E

### E) Sonstiges:

**E 1)** Handelsübliches Mattierungsmittel, enthaltend 19% Silikat und nahezu kein Bindemittel.
**E 2)** Handelsübliche organische Nitroappretur mit 10% Nitrozellulosegehalt, mit Dibutylphthalat weichgestellt.

### 2) Verwendete Rezepturen:

### 2.1) Reine Binderezeptur:

Es wird eine Mischung aus 50 Teilen der Farbe A); 180 Teilen des Füllmittels B); 60 Teilen des Mattierungsmittels E1); 250 Teilen des Acrylats 15 und 150 Teilen des Acrylats 5 hergestellt. Zur Mischung werden noch 50 Teile Wasser gegeben.

### 2.2) Kieselsol - modifizierte Rezeptur:

Die Mischung ist in Farbe, Füllmittel und Mattierungsmittel identisch mit Mischung 2.1); es werden jedoch nur 175 Teile Acrylat Nr. 15 und 105 Teile Acrylat Nr. 5 (siehe Tabelle 1) eingesetzt. Es werden 140 Teile Kieselsol E und 30 Teile Wasser zugemischt.

Die resultierende Mischung hat ein Binder/Kieselsolverhältnis (ff) von 7:3. Der Festkörperanteil Binder plus Kieselsol in der Mischung entspricht dem Festkörperanteil der Acrylatbinder in Mischung 2.1).

Für die Anwendung werden die Mischungen jeweils mit einem Acrylatverdicker auf eine Auslaufviskosität von 40 sec (DIN - Becher, 6mm) gestellt.

Beide Mischungen werden auf ein Vollnarbenleder wie folgt appliziert:
- 1 Auftrag:: Rollcoat mit 20 er Rasterwalze, trocknen
- 2 Auftrag:: Spritzauftrag auf sichtbare Feuchte, danach trocknen und prägen (90°C, 250 bar, 3 sec).

Nach dem Prägen wird ein weiterer Spritzauftrag appliziert und erneut getrocknet.

Schließlich wird auf die so hergestellte Zurichtung noch sehr dünn die Nitroappretur E2) aufgespritzt.

Von den so hergestellten Ledern wird nach jedem Zurichtschritt die Wasserdampfdurchlässigkeit nach EN 12991 bestimmt. Die Tabelle zeigt die erhaltenen Resultate.

**Tabelle 6:**

| WDD - Resultate Zurichtung Mischung 2.1 versus Zurichtung modifizierte Mischung 2.2 (Messung nach EN 12991) | | |
|---|---|---|
| **Zurichtschritt** | WDD [mg cm⁻² h⁻¹] mit Rezeptur 2.1 | WDD [mg cm⁻² h⁻¹] mit Rezeptur 2.2 |
| Eingesetztes Leder | 18,1 | 18,1 |
| Nach Rollcoatauftrag | 7,7 | 8,0 |
| Nach Spritzauftrag 1 | 3,8 | 5,5 |
| Nach Prägen | 3,5 | 4,4 |
| Nach Spritzauftrag 2 | 2,3 | 4,2 |
| Nach Appretur | 2,0 | 3,9 |

Das Resultat belegt eindeutig die deutliche Verbesserung der Wasserdampfdurchlässigkeit durch die Kieselsol-Modifizierung.

## Patentansprüche

1. Wasserdampfdurchlässiger Beschichtungsverbund enthaltend ein oder mehrere flexible Substrate, auf welche ein- oder beidseitig, ein oder mehrere Beschichtungsmittel aufgetragen sind, die gleich oder verschieden sein können, **dadurch gekennzeichnet, dass** mindestens ein Beschichtungsmittel eine kieselsolmodifizierte wässrige Polymerdispersion, aufgebaut aus ungesättigten Monomeren, als Bindemittel enthält.

2. Wasserdampfdurchlässiger Beschichtungsverbund gemäß Anspruch 1, **dadurch gekennzeichnet, dass** die kieselsolmodifizierte wässrige Polymerdispersionen
(I) 40 bis 95 Gew.-% einer wässrigen Polymerdispersion (A), aufgebaut aus ungesättigten Monomeren und
(II) 5 bis 60 Gew.-% einer Kieselsol Dispersion (B) enthält,
wobei gilt, dass die Prozentangaben sich auf das Gewicht nichtflüchtiger Anteile beziehen und sich zu 100 Gew.-% addieren.

3. Wasserdampfdurchlässiger Beschichtungsverbund gemäß Anspruch 2, **dadurch gekennzeichnet, dass** wässrige Polymerdispersionen (A) Polyacrylatdispersionen und/oder Polybutadiendispersionen sind.

4. Wasserdampfdurchlässiger Beschichtungsverbund gemäß Anspruch 2, **dadurch gekennzeichnet, dass** die Kieselsol Dispersionen (B) SiO₂-Partikel mit einem Durchmesser zwischen 1 bis 150 nm aufweisen.

5. Wasserdampfdurchlässiger Beschichtungsverbund gemäß einem oder mehreren der Ansprüche 1 bis 4, **dadurch gekennzeichnet, dass** flexible Substrate Holz, Metall, Kunststoff, Papier, Leder, Textilien, Filz, Glas- oder Glasfasern sind.

6. Wasserdampfdurchlässiger Beschichtungsverbund gemäß Anspruch 5, **dadurch gekennzeichnet, dass** flexible Substrate gewebte oder nichtgewebte Textilien und Leder sind.

7. Wasserdampfdurchlässiger Beschichtungsverbund gemäß einem oder mehreren der Ansprüche 1 bis 6, **dadurch gekennzeichnet, dass** alle Beschichtungsmittel wässrige kieselsolmodifizierte Polymerdispersionen, aufgebaut aus ungesättigten Monomeren, enthalten.

8. Verfahren zur Herstellung des wasserdampfdurchlässigen Beschichtungsverbundes gemäß Anspruch 1, **dadurch gekennzeichnet, dass** ein oder mehrere flexible Substrat(e), ein- oder beidseitig mit einem oder mehreren Beschichtungsmittel(n), die gleich oder verschieden sein können, entweder beschichtet, überzogen oder imprägniert wird/werden, wobei mindestens ein Beschichtungsmittel kieselsolmodifizierte wässrige Polymerdispersion, aufgebaut aus ungesättigten Monomeren, enthält.
